# EUROPEAN PATENT SPECIFICATION

(11) **EP 1 748 146 B1**
(45) Date of publication and mention of the grant of the patent: **04.09.2013**
(21) Application number: 06015560.3
(22) Date of filing: 26.07.2006
(51) Int. Cl.: E06B 9/84, F16D 51/10

(54) **Roller shutter braking mechanism**
Bremsvorrichtung eines Rolladens
Mécanisme de freinage d'un volet roulant

(30) Priority: 26.07.2005 GB 0515268
(43) Date of publication of application: 31.01.2007
(73) Proprietor: Young, Alan Paul, Ely, Cambridgeshire CB7 5EG (GB)
(72) Inventor: Young, Alan Paul, Ely, Cambridgeshire CB7 5EG (GB)
(74) Representative: Sanderson & Co.

(56) References cited:
- EP-A- 0 172 597
- EP-A- 0 768 445
- DE-A1- 3 609 308

## Description

The present invention relates to a braking mechanism for a roller shutter and to roller shutters incorporating such a braking mechanism.

Roller shutters are widely used in many applications, such as on the doorways and openings of buildings and vehicles. Such shutters offer many advantages as they are compactly stored, secure and easy to operate. However, especially on large shutters that roll vertically, there can be a significant amount of weight in the shutter, often more that can be safely handled by a person (for manually operated shutters) or by the control motors (for powered shutters). This weight, which becomes greater as the shutter unrolls, can force the shutter to open or shut very quickly under gravity, and this may be dangerous or damaging. To address this problem, shutters have for many years been provided with damping mechanisms that counteract the effect of gravity to ensure that the shutter screens are not too heavy or dangerous in normal use. Unfortunately, such damper mechanisms can fail and when they do the shutters can suddenly and unexpectedly fall causing damage or injury.

A braking mechanism for a roller shutter according to the preamble of claim 1 is shown for example in DE 3609308 A.

The present invention aims to provide a solution to this problem and so ensure that even following the failure of a damping mechanism the shutter remains safe. The present invention also aims to leave a failed shutter in an otherwise undamaged state for easy repair, and before such repair in a condition where it may still be used albeit is a restricted fashion.

Therefore according to the present invention there is provided a roller shutter including: a rotating drum on which a shutter screen is wound; a damper mechanism that is tensioned by the rotation of the drum as the shutter screen is unwound from the drum and which damper mechanism exerts a force to resist the unwinding of the shutter screen; the rotating drum being mounted on a spindle, which is capable of limited rotation relative to a base structure on which it is mounted, the damper mechanism being connected between the spindle and the drum the damper mechanism urging the spindle to one extreme of its range of angular rotation; said roller shutter further comprising: a braking member moveable between a braking position where rotation of the drum is progressively restricted by friction and a free position, the braking member being linked to the damper mechanism so that the tension therein urges the braking member to the free position, and a counter-tension member which exerts a force on the braking member in an opposed direction, the force exerted by the counter-tension member being less than that exerted by the damper mechanism during normal operation so that the braking member remains in the free position in normal use, but in the event of a failure of the damping mechanism the force exerted by the counter-tension member is sufficient to move the braking member to the braking position to restrict rotation of the drum.

The braking member may comprise one or several components and may bear directly upon the drum (or indeed the screen) to act as a brake. However, at least one brake shoe, and preferably two, may be included (as part of or associated with the braking member) which braking shoes are forced into contact with the inside surface of the drum by the movement of the braking member to the braking position.

The rotating drum in existing shutters is usually mounted on a fixed spindle, i.e. one not capable of any rotation. However, in the present invention the drum is mounted on a spindle which is capable of a limited degree of rotation relative to a base structure on which it is mounted. This rotation needs to be limited to some degree, and would normally be less than 180°. The damper mechanism is connected between the spindle and the drum to control the relative rotation, the damper mechanism urging the spindle to one extreme of its range of angular rotation.

The braking member may preferably be operatively connected, either directly or indirectly to the spindle. The braking member may include a cam that bears on cam surfaces of braking shoes.

The counter-tension member may be connected to the spindle so that it can urge against the force of the damper mechanism toward the other extreme of the spindle's range of angular rotation. If the spindle rotates, the counter-tension member needs to be linked to the spindle at a point radially spaced from the axis of rotation to ensure sufficient turning moment can be applied. The counter-tension member can be connected to an arm that extends from the spindle to provide sufficient radial distance.

The counter-tension member may be adapted in any way to provide the opposed force required, which need not come from a tensile force, but it has been found convenient to utilise a spring which is linked to the spindle and to a fixed base structure. The damper mechanism would cause the spring to be stretched thus increasing its tension. Release of the opposed force on failure of the damper would allow the spring in the counter-tension member to contract thus moving the braking member to the braking position.

The roller shutter may be further provided with a brake release mechanism that can selectively urge (usually under the manual control of an operator) the braking member to the free position. The roller shutter may be further provided with a brake test mechanism (similarly under the selective control of the operator) that can selectively urge the braking member to the braking position. These components can be independent or may be combined in a single device that can urge the braking member in opposed directions.

According to the present invention there is also provided a braking mechanism for a roller shutter including: a rotating drum on which a shutter screen is wound, the rotating drum being mounted on a spindle, which spindle is capable of limited rotation relative to a base structure on which it is mounted; and a spring damper mechanism that is tensioned by the rotation of the drum as the shutter screen is unwound, the damper mechanism being connected between the spindle and the drum, the damper mechanism urging the spindle to one extreme of its range of angular rotation, the braking mechanism comprising a braking member moveable between a braking position where rotation of the drum is progressively restricted by friction and a free position, the braking member being linked to the damper mechanism so that it urges the braking member to the free position, and a counter-tension member which exerts a force on the braking member which force is in a direction opposed to that of the damper mechanism and of a lesser magnitude so that the braking member remains in the free position in normal use, but in the event of a failure of the damping mechanism, the force exerted by the counter-tension member is sufficient to move the braking member to the braking position to restrict rotation of the drum.

Such a braking mechanism could be retrospectively fitted to existing shutters to make them safe, as well as included in newly constructed shutter assemblies.

The braking member may comprise a rotatable actuator, such as a cam, linked to the damper mechanism and the counter-tension member. It may further comprise a brake shoe that is forced to bear on the drum by the movement to the braking position of the actuator.

The braking member can be fitted into a separate drum or other device connected to the end of the main roller shutter drum. This would allow larger diameter brakes to be provided to increase the braking force. Different braking systems, such as callipers and discs could also be used with modifications not falling outside the scope of this invention.

Many roller shutters are operated electronically by motors, and such motors can help to reduce the problems associated with the failure of damping mechanisms. However, they are rarely wholly sufficient and consequently the present invention is equally applicable to powered shutter systems. In such powered systems it may be advantageous to provide a sensor or switch that detects when the braking force has been applied, so that the drive motor can be deactivated as appropriate.

In order that it may be better understood, but by way of example only, an embodiment of the present invention will now be described in more details with reference to the accompanying drawings in which:
**Figure 1** is a schematic end view of a roller shutter according to the present invention, in a normal mode of operation; and
**Figure 2** is a similar view showing the roller shutter in a locked mode following a failure of the damping mechanism.

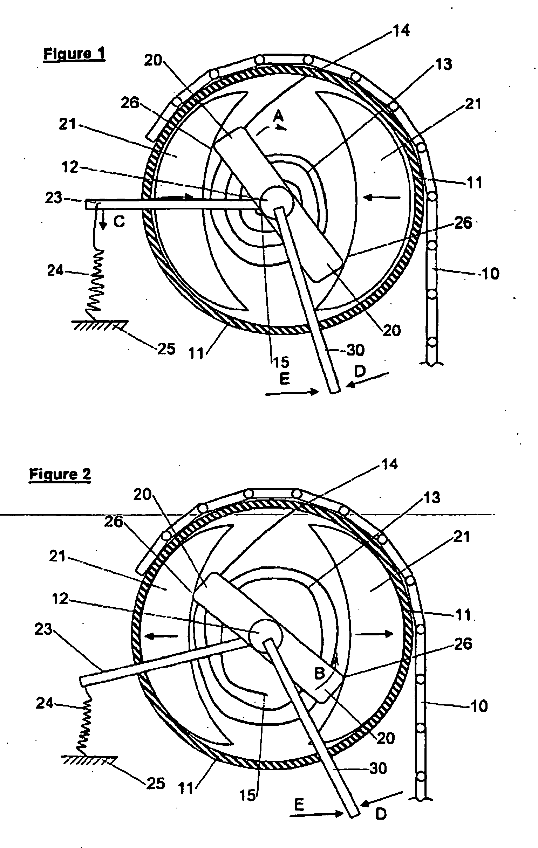

As shown in Figure 1, the embodiment of the present invention comprises a roller shutter assembly having a segmental shutter 10 (only part of which is shown) mounted to be wound on and unwound from a rotatable drum 11. The rotatable drum 11 is mounted for rotation about a spindle 12, which in turn is mounted on a base structure (not shown). Relative rotation of the drum with respect to the spindle 12 is controlled by a damper mechanism. The damper mechanism 13 in this embodiment comprises a helical spring 13, one end 14 of which is connected to the rotatable drum 11 and the other end 15 of which is connected to the spindle 12. In this way rotation in a generally clockwise direction of the rotatable drum 11 (which in this embodiment would unroll the segmental shutter 10) causes the spring damper to become more highly tensioned, and *vice versa.* This tensioning counteracts the increased weight of the segmental shutter 10 hanging from the drum 11 thus ensuring that it is feasible to be safely operated and will not fall rapidly under gravity due to the weight of the shutter.

Such components are as already known in the prior art and in normal operation allow a shutter to be raised and lowered safely. The present invention however is intended to provide a failsafe mechanism such that upon failure of the damper mechanism the segmental shutter 10 will not be unwound from the drum. In the present embodiment of the invention, the spindle 12 is capable of a small degree of angular rotation (coaxial with the rotation of the drum 11). Tension within the helical spring 13, even when the shutter is fully wound onto the rotatable drum 11 ― which is when the helical spring is least wound - is sufficient to cause a rotation of the spindle 12 in the direction of arrow A (clockwise in this view) to one extreme of the spindle's range of movement. This is the configuration shown in Figure 1.

An actuator 20 is connected to the spindle 12 for rotation therewith; the outer ends of the actuator 20 connect with braking shoes 21, which in Figure 1 are shown in the free position. A counter-tension member comprising a radially extending arm 23 and a spring 24 are also provided. The spring 24 is anchored to a fixed structure 25 which is usually the structure to which the shutter assembly is mounted, or perhaps a base structure within which the spindle 12 is mounted.

During normal operation, the tension in the damper mechanism is sufficient to rotate the spindle 12 and actuator 20 in direction A to one extreme of the spindle's range of rotation. In this normal mode of operation the braking shoes 21 are free of the inside surface of the rotatable drum 11 and the drum is free to rotate for winding or unwinding the segmental shutter 10 under the control of the damper mechanism.

As shown in Figure 2 however, failure of the damper mechanism can occur. Failure of the damper mechanism can take several forms, but in this view the end 15 of the helical spring 13 has become unattached from the spindle 12. As such the rotatable drum 11 is no longer subject to any damping force and is free to rotate under the weight of the segmental shutter. However, in the event of such a failure the spring 24 exerts a force in the direction of arrow C on the radially extending arm 23, as it is no longer countered by the opposite force applied by damper mechanism. Movement of the radially extending arm 23 causes the rotation of the spindle and actuator in the direction of arrow B (i.e. counter-clockwise). This rotation causes the outer ends of the actuator 15 which are acting as cams to bear upon cam surfaces 26 on the braking shoes 21. This in turn forces the braking shoes 21 outwards into contact with the rotatable drum 11, thus applying a frictional force that will slow or progressively and gently stop movement of the drum 11 and hence the segmental shutter 10.

Therefore, in the event of a failure in the damping mechanism that reduces the force it applies on the spindle, the emergency braking mechanism of the present invention will engage to slow or stop rotation of the drum, thereby preventing rolling or unrolling of the shutter.

The present invention may be provided with a manual override facility. As shown in Figures 1 and two this may take the form of a lever 30 that is attached to the spindle 12. By applying a rotational force to the lever 30 In direction D or E the braking mechanism can be disengaged or engaged as required. Rotation in the direction of arrow D would release the brake and so application of force this way could be used to reset the system should it accidentally engage as a result of mishandling, or to release the brake after damper failure to allow a shutter to be closed. Rotation in the direction of arrow E would engage the brake and so application of force this way could be used to periodically test the operation of the brake.

Clearly the force applied by the counter-tension member must be carefully balanced to ensure that it does not exceed the force applied by the damping mechanism in normal operation. Were that to occur the braking effect might be encountered during normal operation which would clearly be undesirable. To that end the force required of the counter-tension member, which ideally is slightly less than the minimum force applied by the damper mechanism, needs to be carefully adjusted for each situation. The turning moment which the counter-tension member can apply will be dependent upon the radially separation of the spring mechanism from the axis of rotation of the spindle and the strength and vector of the force applied by the spring 24 or other device. Such factors may be controlled to a significant degree by the points at which the spring mechanism is anchored both to the fixed structure and to the radially extending arm. Further the strength or type of device used to Impart the counter force can be varied. As discussed herein, the counter-tension member can use a spring or other tension mechanism, or Indeed a force applying device that operates other then through a tensile force to provide the counter force. The counterforce may be applied in any suitable way, for example by compression or extension of a pressurised ram, a clock spring or weight system might equally be used to provide the necessary counter force.

The present invention has several further advantages. These advantages include the fact that the system provides the ability to monitor the condition of the main damper mechanism. For example, not just in the event of a catastrophic failure, but where a damper mechanism is gradually degrading, the force that applies will generally drop. If it drops to the point where the counter-tension member starts to apply the braking mechanism the operator of the shutter will become aware of this and may have the damper mechanism properly serviced or adjusted before catastrophic failure. Further due to the progressive nature of the braking, the shutter is arrested in a safe controlled manner, it is not stopped abruptly which can cause other damage.

The spring tension within the main damper is continually sensed, and degradation of the tension (which often happens over time) can be noted. The user is alerted to spring degradation i.e. when re-tensioning is required because the braking mechanism starts to be applied. This does not necessarily stop the shutter but it remains safe whilst repair is arranged. Electrical monitoring can also be incorporated within the system.

The system can also provide a brake test facility, so that the operation of the brake may be easily tested on a regular schedule with very minor action. Also the braking mechanism may have a simple re-set facility should the brake mechanism accidentally engage (e.g. if the shutter door is treated harshly). Similarly an override facility may also be provided to allow a shutter to be brought down in a controlled manner after a damper spring failure.

A user can alerted to a spindle shaft/bearing problem as the brake will apply in the opening direction if the barrel operation becomes tight. Repair can therefore be arranged. The system also allows easy adjustment of the counter tension member by an engineer so that the ideal force strength and direction may be set if conditions change.

## Claims

1. A braking mechanism for a roller shutter that includes a rotating drum (11) on which a shutter screen (10) is wound, a spring damper mechanism (13) that is tensioned by the rotation of the drum (11) as the shutter screen (10) is unwound, the braking mechanism comprising a braking member (20, 21) moveable between a braking position where rotation of the drum (11) is progressively restricted by friction and a free position, the braking member (20, 21) being linked to the damper mechanism (13) so that it urges the braking member (20, 21) to the free position, and a counter-tension member (23, 24) which exerts a force on the braking member (20, 21) which force is in a direction opposed to that of the damper mechanism (13) and of a lesser magnitude so that the braking member (20, 21) remains in the free position in normal use, but in the event of a failure of the damping mechanism (13), the force exerted by the counter-tension member (23, 24) is sufficient to move the braking member (20, 21) to the braking position to restrict rotation of the drum (11), **characterised in that** the rotating drum (11) being mounted on a spindle (12) capable of limited rotation relative to a base structure on which it is mounted and the damper mechanism (13) being connected between the spindle (12) and the drum (11), the damper mechanism (13) urging the spindle (12) to one extreme of its range of angular rotation.

2. A braking mechanism as claimed in claim 1, wherein the braking member comprises a rotatable actuator (20) linked to the damper mechanism (13) and the counter-tension member (23, 24), and a brake shoe (21) that is forced to bear on the drum (11) by the movement of the actuator to the braking position.

3. A roller shutter incorporating a breaking mechanism as claimed in claim 1 or claim 2, comprising: a rotating drum (11) on which a shutter screen (10) is wound: a spring damper mechanism (13) that is tensioned by the rotation of the drum (11) as the shutter screen (10) is unwound from the drum (11) and which damper mechanism (13) exerts a force to resist the unwinding of the shutter screen (10); **characterised in that** the rotating drum (11) is mounted on a spindle (12), which is capable of limited rotation relative to a base structure on which it is mounted, the damper mechanism (13) being connected between the spindle (12) and the drum (11), the damper mechanism (13) urging the spindle (12) to one extreme of its range of angular rotation.

4. A roller shutter as claimed in claim 3, wherein the braking member (20) bears upon a brake shoe (21) which is forced into frictional contact with the rotating drum (11) as the braking member (20) moves to the braking position to progressively slow the drum (11).

5. A roller shutter as claimed in claim 4, wherein two or more brake shoes (21) are provided.

6. A roller shutter as claimed in any of claims 3 to 5, wherein the braking member (20) is connected to the spindle (12).

7. A roller shutter as claimed in any of claims 3 to 6, wherein the counter-tension member (23, 24) is connected to the spindle (12) and urges against the damper mechanism (13) to the other extreme of its range of angular rotation.

8. A roller shutter as claimed in any of claims 3 to 7, wherein the counter-tension member (23, 24) includes a spring (24) which is linked to the spindle (12) and to a fixed base structure (25).

9. A roller shutter as claimed in any of claims 3 to 8, wherein there is further provided a brake release mechanism (30) that can selectively urge the braking member (20) to the free position.

10. A roller shutter as claimed in any of claims 3 to 9, wherein there is further provided a brake test mechanism (30) that can selectively urge the braking member (20) to the braking position.

11. A roller shutter as claimed in any of claims 3 to 10, wherein the shutter is power operated by an electric motor and there is further provided a switch adapted to deactivate the motor when the braking member (20) moves to the braking position.

## Patentansprüche

1. Bremsmechanismus für einen Rollladen, der eine sich drehende Trommel (11), auf der eine Rollladen-Abschirmung (10) aufgewickelt ist, einen Federdämpfungsmechanismus (13) aufweist, der durch die Drehung der Trommel (11) gespannt wird, wenn die Rollladen-Abschirmung (10) abgewickelt wird, wobei der Bremsmechanismus ein Bremsglied (20, 21), das zwischen einer Bremsstellung, in der die Drehung der Trommel (11) durch Reibung zunehmend eingeschränkt wird, und einer freien Stellung beweglich ist, wobei das Bremsglied (20, 21) mit dem Dämpfungsmechanismus (13) verbunden ist, so dass dieser das Bremsglied (20, 21) in die freie Stellung drückt, und ein Gegenspannteil (23, 24) aufweist, das eine Kraft auf das Bremsglied (20, 21) ausübt, die in einer entgegengesetzten Richtung zu der des Dämpfungsmechanismus (13) gerichtet und von geringerer Stärke ist, so dass das Bremsglied (20, 21) im normalen Betrieb in der freien Stellung bleibt, aber im Fall eines Ausfalls des Dämpfungsmechanismus (13) die von dem Gegenspannteil (23, 24) ausgeübte Kraft ausreichend groß ist, um das Bremsglied (20, 21) in die Bremsstellung zu bewegen, um die Drehung der Trommel (11) einzuschränken, **dadurch gekennzeichnet, dass** die sich drehende Trommel (11) an einer Spindel (12) angebracht ist, die zu einer begrenzten Drehung relativ zu einer Basisstruktur in der Lage ist, an der sie angebracht ist, und dass der Dämpfungsmechanismus (13) zwischen der Spindel (12) und der Trommel (11) verbunden ist, wobei der Dämpfungsmechanismus (13) die Spindel (12) in eine äußerste Stellung ihres Winkeldrehbereichs drückt.

2. Bremsmechanismus wie in Anspruch 1 beansprucht, wobei das Bremsglied ein drehbares Stellteil (20), das mit dem Dämpfungsmechanismus (13) und dem Gegenspannteil (23, 24) verbunden ist, und einen Bremsschuh (21) aufweist, der durch die Bewegung des Stellteils in die Bremsstellung in Anlage an der Trommel (11) gedrückt wird.

3. Rollladen, der einen Bremsmechanismus wie in Anspruch 1 oder Anspruch 2 beansprucht aufweist, mit: einer sich drehenden Trommel (11), auf der eine Rollladen-Abschirmung (10) aufgewickelt ist, einem Federdämpfungsmechanismus (13), der durch die Drehung der Trommel (11), wenn die Rollladen-Abschirmung (10) von der Trommel (11) abgewickelt wird, gespannt wird, wobei der Dämpfungsmechanismus (13) eine Kraft ausübt, um dem Abwickeln der Rollladenabschirmung (10) Widerstand entgegenzusetzen, **dadurch gekennzeichnet, dass** die sich drehende Trommel (11) an einer Spindel (12) angebracht ist, die zu einer begrenzten Drehung relativ zu einer Basisstruktur in der Lage ist, an der sie angebracht ist, wobei der Dämpfungsmechanismus (13) zwischen der Spindel (12) und der Trommel (11) verbunden ist, wobei der Dämpfungsmechanismus (13) die Spindel (12) in eine äußerste Stellung ihres Winkeldrehbereichs drückt.

4. Rollladen wie in Anspruch 3 beansprucht, wobei das Bremsglied (20) an einem Bremsschuh (21) anliegt, der in Reibungskontakt mit der sich drehenden Trommel (11) gedrückt wird, wenn das Bremsglied (20) sich in die Bremsstellung bewegt, um die Trommel (11) zunehmend zu verlangsamen.

5. Rollladen wie in Anspruch 4 beansprucht, wobei zwei oder mehr Bremsschuhe (21) vorgesehen sind.

6. Rollladen wie in einem der Ansprüche 3 bis 5 beansprucht, wobei das Bremsglied (20) mit der Spindel (12) verbunden ist.

7. Rollladen wie in einem der Ansprüche 3 bis 6 beansprucht, wobei das Gegenspannteil (23, 24) mit der Spindel (12) verbunden ist und sie gegen den Dämpfungsmechanismus (13) zu ihrer anderen äußersten Stellung ihres Drehwinkelbereichs drückt.

8. Rollladen wie in einem der Ansprüche 3 bis 7 beansprucht, wobei das Gegenspannteil (23, 24) eine Feder (24) aufweist, die mit der Spindel (12) und einer stationären Basisstruktur (25) verbunden ist.

9. Rollladen wie in einem der Ansprüche 3 bis 8 beansprucht, wobei ferner ein Bremslösemechanismus (30) vorgesehen ist, der das Bremsglied (20) selektiv in seine freie Stellung drücken kann.

10. Rollladen wie in einem der Ansprüche 3 bis 9 beansprucht, wobei weiter ein Bremstestmechanismus (30) vorgesehen ist, der das Bremsglied (20) selektiv in die Bremsstellung drücken kann.

11. Rollladen wie in einem der Ansprüche 3 bis 10 beansprucht, wobei der Rollladen durch einen Elektromotor angetrieben ist und weiter ein Schalter vorgesehen ist, der dazu eingerichtet ist, den Motor zu deaktivieren, wenn das Bremsglied (20) sich in die Bremsstellung bewegt.

## Revendications

1. Mécanisme de freinage d'un volet roulant, comprenant un tambour rotatif (11) sur lequel s'enroule un rideau de protection (10), un dispositif amortisseur (13) qui est mis sous tension par la rotation du tambour (11) lorsque le rideau de protection (10) est déroulé, ce mécanisme comportant un élément de freinage (20,21) déplaçable entre une position de freinage dans laquelle la rotation du tambour (11) est progressivement réduite par friction et une position libre, l'élément de freinage (20,21) étant relié au dispositif amortisseur (13) de manière à repousser cet élément (20,21) vers la position libre, et un élément de contre poussée (23,24) qui exerce une force sur l'élément de freinage (20,21), cette force étant dans la direction opposée de celle du dispositif amortisseur (13) et avec une intensité moins élevée, de telle sorte que l'élément de freinage (20,21) reste dans la position libre lors de l'usage normal du rideau mais que, en cas de panne du dispositif amortisseur (13), la force exercée par l'élément de contre poussée (23,24) soit suffisante pour déplacer l'élément de freinage (20,21) dans la position de freinage pour réduire la rotation du tambour (11), **caractérisé en ce que** le tambour rotatif (11) est monté sur une broche (12) apte à subir une rotation limitée par rapport à la structure de base sur laquelle est monté le mécanisme, le dispositif amortisseur (13) étant connecté entre la broche (12) et le tambour (11), ce dispositif amortisseur (13) repoussant la broche (12) jusqu'à l'une des positions extrêmes de sa rotation angulaire.

2. Mécanisme de freinage selon la revendication 1, dans lequel l'élément de freinage comporte un organe de commande (20) relié au dispositif amortisseur (13) et à l'élément de contre poussée (23,24), et un sabot de freinage (21) qui est forcé à porter sur le tambour (11) par le mouvement de l'organe de commande vers la position de freinage.

3. Volet roulant incorporant un mécanisme de freinage selon l'une des revendications 1 ou 2, comportant un tambour rotatif (11) sur lequel est enroulé un rideau de protection (10), un dispositif amortisseur à ressort (13) mis en tension par la rotation du tambour (11) lorsque le rideau de protection (10) est déroulé du tambour, ce dispositif amortisseur à ressort (13) exerçant un force pour s'opposer au déroulement du rideau de protection (10), **caractérisé en ce que** le tambour rotatif (11) est monté sur une broche (12) capable d'une rotation limitée par rapport à la structure de base sur laquelle il est monté, le dispositif amortisseur étant relié entre la broche (12) et le tambour (11), le dispositif amortisseur (13) repoussant la broche (12) jusqu'à l'une des positions extrêmes de sa rotation angulaire.

4. Volet roulant selon la revendication 3, dans lequel l'élément de freinage (20) porte sur un sabot (21) qui est forcé en position de contact par friction avec le tambour rotatif (11) de telle sorte que cet élément (20) se déplace vers sa position de freinage pour ralentir progressivement le tambour (11).

5. Volet roulant selon la revendication 4, dans lequel sont prévus deux ou plus sabots (21).

6. Volet roulant selon l'une quelconque des revendications 3 à 5, dans lequel l'élément de freinage (20) est relié à la broche (12).

7. Volet roulant selon l'une quelconque des revendications 3 à 6, dans lequel l'élément de contre poussée (23,24) est connecté à la broche (12) et agit sur le dispositif amortisseur (13) à l'autre des positions extrêmes de sa rotation angulaire.

8. Volet roulant selon l'une quelconque des revendications 3 à 7, dans lequel l'élément de contre poussée (23,24) comporte un ressort (24) qui est lié à la broche (12) et, à une structure de base fixe (25).

9. Volet roulant selon l'une quelconque des revendications 3 à 8, dans lequel est aussi prévu un mécanisme de relâchement du freinage (30), apte à repousser sélectivement l'élément de freinage (20) vers la position libre.

10. Volet roulant selon l'une quelconque des revendications 3 à 9, dans lequel est prévu également un dispositif de test du freinage (30), apte à repousser sélectivement l'élément de freinage (20) vers la position de freinage.

11. Volet roulant selon l'une quelconque des revendications 3 à 10, dans lequel ce volet est actionné par un moteur électrique et est aussi pourvu d'un interrupteur pour mettre ce moteur hors service lorsque l'élément de freinage (20) se déplace vers la position de freinage.
